**Europäisches Patentamt**

**European Patent Office**

**Office européen des brevets**

(19)

(11) Veröffentlichungsnummer : **0 361 009 B1**

(12) # EUROPÄISCHE PATENTSCHRIFT

(45) Veröffentlichungstag der Patentschrift :
**22.04.92 Patentblatt 92/17**

(51) Int. Cl.$^5$ : **B64G 1/50,** F28D 5/00

(21) Anmeldenummer : **89113493.4**

(22) Anmeldetag : **22.07.89**

(54) **Verdampfungswärmetauscher.**

(30) Priorität : **21.09.88 DE 3832001**

(43) Veröffentlichungstag der Anmeldung :
**04.04.90 Patentblatt 90/14**

(45) Bekanntmachung des Hinweises auf die
Patenterteilung :
**22.04.92 Patentblatt 92/17**

(84) Benannte Vertragsstaaten :
**FR IT**

(56) Entgegenhaltungen :
**EP-A- 0 272 766**
**DE-A- 2 033 206**
**DE-A- 3 718 873**
**FR-A- 1 539 635**

(56) Entgegenhaltungen :
**US-A- 2 278 242**
**US-A- 2 570 247**
**US-A- 3 969 448**
**US-A- 4 434 112**

(73) Patentinhaber : **ERNO Raumfahrttechnik**
**Gesellschaft mit beschränkter Haftung**
**Hünefeldstrasse 1-5**
**W-2800 Bremen 1 (DE)**

(72) Erfinder : **Leidinger, Bernhard, Dr.**
**Am Rövekamp 12**
**W-2805 Stuhr 1 (DE)**
Erfinder : **Mayinger, Franz-Xaver**
**Arcisstrasse 21**
**W-8000 München 2 (DE)**
Erfinder : **Muschelknautz, Sebastian, Dipl,-Ing.**
**Arcisstrasse 21**
**W-8000 München 2 (DE)**

**Beschreibung**

Die Erfindung betrifft einen Verdampfungswärmetauscher gemäß dem Oberbegriffes des Patentanspruches 1.

Bei Raumfahrzeugen, die sich in der Auf- oder Abstiegsphase durch die Erdatmosphäre befinden oder die in der Erdumlaufbahn extremen thermischen Belastungen ausgesetzt sind, gilt es, eine sichere und zuverlässige Wärmeabfuhr zu gewährleisten.

Aus der DE-C- 37 18 873 ist bereits ein derartiger Verdampfungswärmetauscher bekannt, bei dem das zu kühlende Medium eines aktiven Flüssigkeitskreislaufes zur Wärmeabfuhr mit einem zu verdampfenden Medium in Wärme übertragenden Kontakt gebracht wird, welches in einem mitgeführten Vorratsbehälter gelagert ist. Den entstehenden Dampf bläst das Raumfahrzeug in seiner Umgebung ab.

Um einerseits das zu verdampfende Medium möglichst vollständig in Form einer Verdampfung auszunutzen und dabei eine ausreichend hohe Wärmeübertragung zwischen dem zu verdampfenden Medium und den Kühlflüssigkeitskanälen zu erreichen, muß der entstehende Dampf von dem unverdampften Teil des Mediums getrennt werden. Hierdurch wird verhindert, daß der unverdampfte Teil in Form von größeren Flüssigkeitstropfen mit dem bereits verdampften Teil aus dem Raumfahrzeug abgeblasen wird, ohne durch seine Verdampfung zur Kühlung ausgenutzt worden zu sein.

In der DE-C- 37 18 873 wurde bereits versucht, durch eine gefaltete Formgebung der Kühlflüssigkeitskanäle in Strömungsrichtung nicht verdampfte Flüssigkeitsreste mit Hilfe von Massenträgheitskräften an die Wände der Kühlflüssigkeitskanäle abzulagern und dort in die Gasphase zu überführen. Untersuchungen an diesen vorbekannten Verdampfungswärmetauscher haben jedoch ergeben, daß die Ausnutzung des zu verdampfenden Mediums noch weiter verbessert werden könnte.

Der Erfindung liegt demgemäß die Aufgabe zugrunde, einen Verdampfungswärmetauscher der eingangs genannten Gattung verfügbar zu machen, bei dem das zu verdampfende Medium nahezu vollständig in seiner verdampften Form zu einer hohen Wärmeübertragung ausgenutzt wird.

Erfindungsgemäß wird diese Aufgabe durch die im Patentanspruch 1 gekennzeichneten Merkmale gelöst. Bevorzugte Merkmale, die die Erfindung vorteilhaft weiterbilden, sind den Unteransprüchen zu entnehmen.

Aufgrund der erfindungsgemäßen Ausgestaltung des Verdampfungswärmetauschers mit einem bündelartigen Aufbau aus abgeplatteten Röhrchen werden in vorteilhafter Weise die Wärmeübertragungsverhältnisse deutlich und unter nahezu vollständiger Ausnutzung des zu verdampfenden Mediums in dessen Dampfform erreicht. In günstiger Weise werden nicht nur Gefrierprobleme in dem Einlaßbereich ohne ein Steuerelement beseitigt, sondern es wird auch erreicht, daß der Druckabfall in der zweiphasigen Strömung aus der Einlaßkammer zu dem Auslaß zu einem Druck oberhalb des Tripelpunktes des zu verdampfenden Mediums, beispielsweise Wassers (6 m bar) an dem Einlaßventil liegt. Außerdem kann durch eine geeignete Vermessung der Querschnittsfläche der abgeplatteten Röhrchen vorteilhaft in dem bündelartigen Aufbau das Entstehen einer Strömung des zu verdampfenden zweiphasigen Mediums mit Schallgeschwindigkeit vermieden werden. Die sogenannten Maßnahmen tragen wirkungsvoll zur Verbesserung des Wirkungsgrades des Verdampfungswärmetauschers bei.

Ein bevorzugtes Ausführungsbeispiel der Erfindung wird nachfolgend unter Bezugnahme auf die beigefügten Zeichnungen näher erläutert. Es zeigen:

Fig. 1 eine schematische Seitenansicht eines Ausführungsbeispiels eines Verdampfungswärmetauschers;

Fig. 2 einen Schnitt gemäß der Schnittlinie II-II in Fig. 1;

Fig. 3 einen vergrößerten Ausschnitt III gemäß Kennzeichnung in Fig. 1; und

Fig. 4 eine Darstellung eines Abschnittes eines abgeplatteten Röhrchens für Kühlflüssigkeitskanäle.

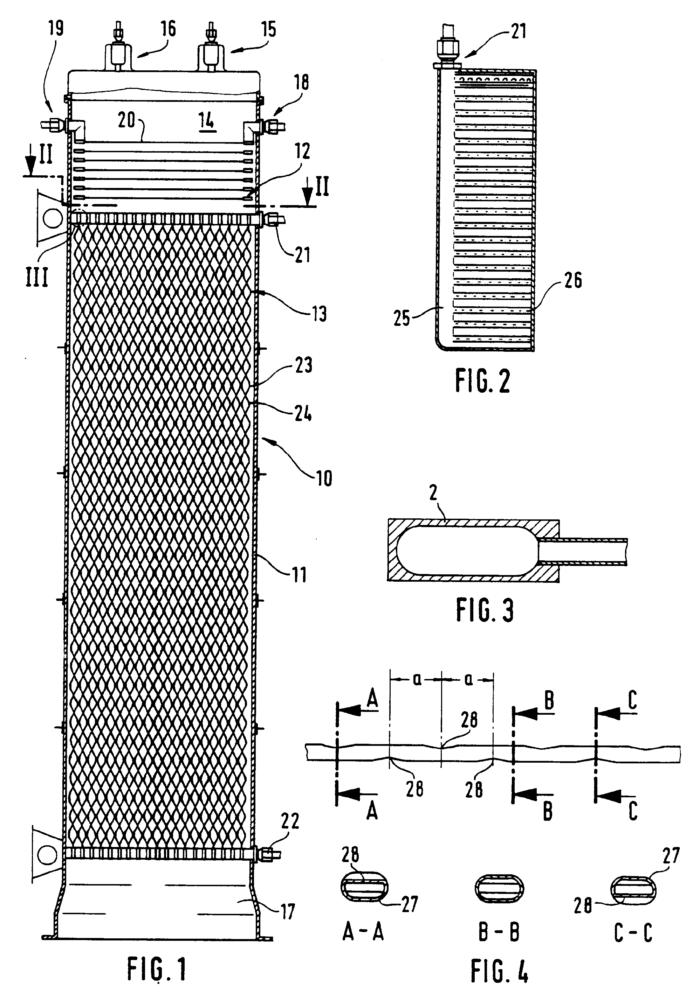

In Fig. 1 ist eine schematisierte Längsansicht durch einen Verdampfungswärmetauscher 10 dargestellt. Der Verdampfungswärmetauscher 10 besitzt ein Gehäuse 11, in dem ein aktiver Flüssigkeitskühlkreislauf 12, beispielsweise für Schmieröl, und ein aktiver Flüssigkeitskühlkreislauf 13, beispielsweise Hydrauliköl, in Längsrichtung des Verdampfungswärmetauschers hintereinander liegend angeordnet sind.

In das Gehäuse 11 des Verdampfungswärmetauschers 10 ist in Fig. 1 an der linken Seite ein Raum 14 gebildet, in dem über Einlaßventile 15 und 16 von einem nicht dargestellten Vorratsbehälter zugeleitetes zu verdampfendes Medium, beispielsweise Wasser eingeleitet wird. Das andere Ende des annähernd rechteckförmigen Gehäuses 11 wird von einer Dampfaustrittsmündung 17 gebildet.

Der aktive Kühlkreislauf 12 besitzt einen in Fig. 1 oben angedeuteten Einsatz 18 und einen in Fig. 1 unten angedeuteten Auslaß 19. Zwischen dem Einlaß 18 und dem Auslaß 19 verlaufend senkrecht zur Strömungsrichtung des zu verdampfenden Mediums Kühlflüssigkeitskanäle 20.

Der aktive Kühlkreislauf 13 besitzt einen Einlaß 21 und einen Auslaß 22 sowie gefaltete Kühlflüssigkeitskanäle 23 und 24. Fig. 3 zeigt vergrößert einen Ausschnitt aus Fig. 1 im Bereich eines sich senkrecht zu einem Rohr 25 des Einlasses 21 erstreckenden Verteilungsrohres 26.

Aus dem Verteilungsrohr 26 strömt das Kühlmittel des aktiven Kühlkreislaufes 13 in die Kühlflüssigkeitskanäle 21 und 24.

Die Kühlflüssigkeitskanäle 24 und 23 sind innerhalb des Gehäuses 11 in Hauptströmungsrichtung des zu verdampfenden Mediums miteinander und senkrecht zu der vorgenannten Hauptströmungsrichtung untereinander liegend angeordnet und bestehen aus abgeplatteten Röhrchen 27. Fig. 4 zeigt in vergrößerter Darstellung einen Abschnitt eines derartigen abgeplatteten Röhrchens 27. Die untereinander liegenden Röhrchen weisen, wie aus Fig. 1 zu entnehmen ist, eine parallele Faltung um etwa 30° zur Hauptströmungsrichtung des zu verdankenden Mediums auf. In Hauptströmungsrichtung gesehen besitzen jeweils zwei nebeneinander liegende Röhrchen 23, 24 eine gegensinnige Faltung um etwa 30° in Richtung der Hauptströmungsrichtung des zu verdampfenden Mediums.

Die jeweils parallelen Faltungen der Röhrchen 23 und der Röhrchen 24 bilden im Querschnitt gesehen ein Netzwerk nach Art eines Drahtgitters. Sie stellen für Flüssigkeitspropfen in der zweiphasigen Strömung des zu verdampfenden Mediums eine wirkungsvolle erhitzte Abscheidevorrichtung dar. Die Röhrchen bilden die Strömung hemmende jeweils parallele Ablenkflächen.

In Fig. 4 ist ein Abschnitt 27 der abgebildeten Röhrchen 23 bzw. 24 dargestellt. Die verschiedenen Schnitte A-A, B-B, C-C veranschaulichen den Röhrchenquerschnitt.

Der Rohrabschnitt 27 besteht im wesentlichen aus einem abgeplatteten Rohr, dessen Innendurchmesser bei dem dargestellten Ausführungsbeispiel vor dem 2,51 mm betrug. Der Rohrabschnitt weist Eindrückungen 28 auf, die zu einem guten Wärmestrahlungsverhalten beitragen. Die Eindrückungen 28 sind abwechselnd in gleichen Abständen a an der Oberseite und der Unterseite des abgeplatteten Röhrchens 27 vorgesehen. Der Abstand a beträgt bei einer bevorzugten Ausgestaltung etwa 5,3 mm. Der durch die Eindrückung 28 den Röhrchen 27 gebildete Querschnitt ist aus den Querschnittsansichten A-A, C-C, zu erkennen.

Eine bevorzugte Länge für das Rohr eines dargestellten Kühlflüssigkeitskanals 23 bzw. 24 beträgt 1,2 m. Der bündelartige Aufbau des aktiven Kühlkreislaufes 13 setzt sich bei einer vorgesehenen Ausführungsform aus 80 einzelnen Röhrchen zusammen.

Bei dem Verdampfungswärmetauscher 10 wird der Volumenstrom des zu verdampfenden Mediums, beispielsweise Wasser mit Hilfe der Eingangsventile 15, 16 gesteuert, die ihrerseits von nicht dargestellten Stellmotoren angesteuert werden.

Das zu verdampfende Medium wird mit einem Förderdruck, der oberhalb seines Tripelpunktes liegt, beispielsweise ca. 6 m bar für Wasser, durch die Einlaßventile 15, 16 in den Raum 14 gedrückt. Aufgrund des hier vorherrschenden geringeren Druckes verdampft ein kleiner Teil des zu verdampfenden Mediums, bei Wasser ca. 8 % Masse bezogen, bei ca. 60° C Speisetemperatur adiabatisch und kühlt dabei das zu verdampfende Medium ab.

Das durch diesen ersten Verdampfungsvorgang im Raum 14 entstandene Gas vermischt sich mit den verbliebenen Flüssigkeitstropfen und bildet eine durch die Gasexpansion beschleunigte Zweiphasenströmung, deren volumenbezogene Bestandteile bei Verwendung von 25° C warmem Wasser bei kleinem Druck etwa zu 99,95 % Wasserdampf und 0,05 % Wasser sind.

Diese Zweiphasenströmung wird nun nacheinander zwischen den Kühlflüssigkeitskanälen 20 des Kühlkreislaufes 12 und des Kühlflüssigkeitskanälen 23 bzw. 24 des Kühlkreislaufes 13 geleitet. Der Kühlkreislauf 13 kann dabei in nicht dargestellter Weise aus mehreren separaten Kühlflüssigkeitskreisläufen bestehen.

Die Kühlflüssigkeit in den vorgenannten Kühlkreisläufen transportiert in an sich bekannter Weise Wärme von Wärmeerzeugern zu den Kühlflüssigkeitskanälen, die den eigentlichen Verdampfungswärmetauscher bilden, wobei an den Oberflächen der Kühlflüssigkeitskanäle Wärme an das zu verdampfende Medium übertragen und dieses verdampft wird. Der durch den Wärmeaustausch entstandene Dampf verläßt anschließend über die Dampfaustrittsmündung 17 das Raumfahrzeug.

Bei dem Durchtritt durch die gefalteten Kühlflüssigkeitskanäle 23 und 24 erfahren die in der Gasphase mitgerissenen Flüssigkeitstropfen aufgrund ihrer Massenträgheit eine Abweichung von der Gasströmungsrichtung und prallen gegen nahegelegene Kühlflüssigkeitskanalaußenwände. Dort bilden sie mit anderen Flüssigkeitstropfen einen Flüssigkeitsfilm, der teilweise verdampft. An den Faltstellen der Kühlflüssigkeitskanäle bilden sich aus den unverdampften Resten des Feuchtigkeitsfilm neue Tropfen, die von der Zweiphasenströmung mitgerissen und an einer anderen Stelle erneut an einer Kühlflüssigkeitskanalwandaußenfläche gelagert werden. Bei dem erfindungsgemäßen Verdampfungswärmetauscher erfolgt dabei durch die vorgesehene Strömungsaufteilung in unterschiedliche Strömungsabschnitt mit wechselnden Strömungsrichtungen eine besonders intensive Kontaktierung des zu verdampfenden Mediums, die zu einer vollständigen Verdampfung mit einem hervorragenden Wirkungsgrad der Wärmeübertragung führt.

**Patentansprüche**

1. Verdampfungswärmetauscher mit wenigstens einem aktiven Flüssigkeitskühlkreislauf zur Abkühlung von Wärme in Raumfahrzeugen unter Schwerelosigkeit sowie bei unterschiedlichen Beschleunigungen, mit einem Raum der wenigstens ein Einlaßventil für zugeleitetes zu verdampfendes Medium aufweist, und mit senkrecht zur Hauptströmungsrichtung dieses Mediums voneinander beabstandeten Kühlflüssigkeitskanälen die mehrfach in Hauptströmungsrichtung gefaltet sind und zwischen denen das zuverdampfende Medium leitbar ist, dadurch gekennzeichnet,

a) daß die Kühlflüssigkeitskanäle aus Röhrchen (23,24;27) gebildet sind, die in einem Bündel, bestehend aus mehreren parallelen Ebenen, angeordnet sind, wobei jede Ebene mehrere Röhrchen enthält und zügleich auch Faltebene ist,

b) daß jedes Röhrchen (23,24;27) in einem in einer Faltebene verlaufenden Muster gefaltet ist, bei dem eine Reihe von gleich langen geraden Abschnitten alternierend eine Linie parallel zur Hauptströmungsrichtung in einem Winkel von jeweils etwa 30° schneiden,

c) daß die Faltmuster der in unmittelbar benachbarten Ebenen angeordneten Röhrchen (23,24;27) um 180° zueinander phasenverschoben sind,

d) daß die Faltmuster der in einer gemeinsamen Ebene angeordneten Röhrchen (23,24;27) phasengleich sind, und

e) daß die Röhrchen (23,24;27) abgeplattet sind.

2. Verdampfungswärmetauscher nach Anspruch 1, dadurch gekennzeichnet, daß jedes abgeplattete Röhrchen zur Verbesserung der Wärmeübertragung zusätzliche Eindrückungen aufweist.

3. Verdampfungswärmetauscher nach Anspruch 2, dadurch gekennzeichnet, daß die Eindrückungen jedes Röhrchens abwechselnd und im gleichen Abstand an der Ober- und/oder Unterseite des Röhrchens vorgesehen sind.

4. Verdampfungswärmetauscher nach einem der vorangehenden Ansprüche, dadurch gekennzeichnet, daß die Faltungen der abgeplatteten Röhrchen mit gleichbleibenden Faltabschnitten gebildet sind.

5. Verdampfungswärmetauscher nach einem der vorangehenden Ansprüche, dadurch gekennzeichnet, daß der bündelartige Aufbau der Kühlflüssigkeitskanäle (23,24) für das Kontaktieren mit versprühter zu verdampfender Flüssigkeit vorgesehen ist, die zur Benetzungsverbesserung mit einem Benetzungsmittel angereichert ist und deren Versprühen über eine adiabate Entspannungsverdampfung der zwar unterkühlt den Einlaßventilen (15,16) zugeführten, aber relativ zum Druck im Raum (14) überhitzter Flüssigkeit erfolgt.

**Claims**

1. An evaporative heat exchanger having at least one active fluid cooling circuit for the cooling of heat in space vehicles under weightlessness as well as upon different accelerations, with a chamber which has at least one inlet valve for supplied medium that is to be evaporated, and having cooling fluid ducts which are spaced apart from one another perpendicular to the main direction of flow of this medium and which are folded repeatedly in the main direction of flow and between which the medium that is to be evaporated is conductible, characterised

a) in that the cooling fluid ducts are formed from tubes (23, 24; 27) which are arranged in a bundle consisting of several parallel planes, in which respect each plane contains several tubes and is at the same time also the folding plane,

b) in that each tube (23, 24; 27) is folded in a pattern extending in one folding plane, in the case of which a series of equally long straight portions alternately intersect a line parallel to the main direction of flow at an angle of respectively about 30°,

c) in that the fold patterns of the tubes (23, 24; 27) arranged in directly adjacent planes are out-of-phase by 180° with regard to one another,

d) in that the fold patterns of the tubes (23, 24; 27) arranged in a common plane are in-phase, and

e) in that the tubes (23, 24; 27) are flattened.

2. An evaporative heat exchanger according to claim 1, characterised in that each flattened tube has additional impressions for the improvement of the heat transfer.

3. An evaporative heat exchanger according to claim 2, characterised in that the impressions in each tube are provided alternately and at the same spacing on the upper and/or lower side of the tube.

4. An evaporative heat exchanger according to one of the preceding claims, characterised in that the folds of the flattened tubes are formed with constant fold portions.

5. An evaporative heat exchanger according to one of the preceding claims, characterised in that the bun-

**EP 0 361 009 B1**

dle-like construction of the cooling fluid ducts (23, 24) is provided for the contacting with sprayed liquid that is to be evaporated, which is enriched with a wetting agent to improve the wetting and the spraying of which is effected by way of an adiabatic expansion evaporation of the liquid which is suplied undercooled to the inlet valves (15,16) but which is superheated relative to the pressure in the chamber (14).

## Revendications

1. Echangeur de chaleur à évaporation comportant au moins un circuit de liquide de refroidissement actif pour l'évacuation de chaleur dans des véhicules spatiaux dans des conditions d'apesanteur ainsi qu'en présence d'accélérations diverses, comportant une chambre qui présente au moins une vanne d'entrée pour le fluide à évaporer entrant et des conduits pour le liquide de refroidissement qui sont disposés à distance les uns des autres perpendiculairement à la direction principale d'écoulement du fluide à évaporer et qui sont pliés plusieurs fois dans la direction principale d'écoulement et entre lesquels le fluide à évaporer peut être introduit, caractérisé

a) en ce que les conduits pour le liquide de refroidissement sont formés par des tubes capillaires (23, 24; 27) qui sont disposés en un faisceau comportant plusieurs plans parallèles, chaque plan contenant plusieurs tubes capillaires et étant simultanément le plan de pliage,

b) en ce que chaque tube capillaire (23, 24; 27) est plié suivant un dessin qui est situé dans un plan et selon lequel une rangée de tronçons rectilignes de même longueur coupe alternativement, avec un angle de 30° environ chaque fois, une ligne parallèle à la direction d'écoulement principale,

c) en ce que les dessins de pliage des tubes capillaires (23, 24; 27) disposés dans des plans contigus sont mutuellement déphasés de 180°,

d) en ce que les dessins de pliage des tubes capillaires (23, 24; 27) disposés dans un plan commun ont même phase,

e) en ce que les tubes capillaires (23, 24; 27) sont aplatis.

2. Echangeur de chaleur à évaporation selon la revendication 1, caractérisé en ce que chaque tube capillaire aplati présente des déformations en creux supplémentaires pour améliorer la transmission de chaleur.

3. Echangeur de chaleur à évaporation selon la revendication 2, caractérisé en ce que les déformations en creux de chaque tube capillaire sont prévues en alternance et à distance constante sur la face supérieure et/ou sur la face inférieure du tube capillaire.

4. Echangeur de chaleur à évaporation selon l'une des revendications précédentes, caractérisé en ce que les pliures des tubes capillaires aplatis sont formées par des parties de pliage qui restent identiques.

5. Echangeur de chaleur à évaporation selon l'une des revendications précédentes, caractérisé en ce que la structure en faisceau des conduits pour le liquide de refroidissement (23, 24) est agencée pour venir en contact avec le liquide à évaporer pulvérisé, lequel liquide est additionné d'un agent de mouillage afin d'améliorer le mouillage et est pulvérisé par une vaporisation de détente adiabatique du liquide qui parvient certes refroidi aux vannes d'entrée (15, 16) mais est surchauffé par rapport à la pression qui règne dans la chambre (14).

FIG. 1

FIG. 2

FIG. 3

FIG. 4

A - A          B - B          C - C

6